# EUROPEAN PATENT SPECIFICATION

(11) **EP 3 204 869 B1**
(45) Date of publication and mention of the grant of the patent: **16.02.2022**
(21) Application number: 15848329.7
(22) Date of filing: 25.09.2015
(51) Int. Cl.: G06F 21/62, G06F 16/13

(54) **SYSTEMS AND METHODS TO MANAGE FILE ACCESS**
SYSTEME UND VERFAHREN ZUR VERWALTUNG DES ZUGANGS ZU DATEIEN
SYSTÈMES ET PROCÉDÉS POUR GÉRER UN ACCÈS DE FICHIER

(30) Priority: 07.10.2014 US 201462060999 P; 20.04.2015 US 201514691335
(43) Date of publication of application: 16.08.2017
(73) Proprietor: CYNNY SPACE SRL, 50134 Firenze (IT)
(72) Inventor: BARGAGNI, Stefano, R-50129 Firenze (RO)
(74) Representative: Botti, Mario
(86) International application number: PCT/US2015/052413
(87) International publication number: WO 2016/057245

(56) References cited:
- US-A1- 2012 304 247
- US-A1- 2014 068 074
- US-A1- 2014 120 511
- US-B1- 6 901 426
- US-B1- 8 200 669
- US-B2- 7 031 962
- Stephan Bloehdorn ET AL: "TagFS - Tag Semantics for Hierarchical File Systems", , 1 May 2006 (2006-05-01), XP055476726, Retrieved from the Internet: URL:http://citeseerx.ist.psu.edu/viewdoc/d ownload?doi=10.1.1.60.4187&rep=rep1&type=p df [retrieved on 2018-05-18]

## Description

### RELATED APPLICATIONS

This application claims priority to U.S. Pat. App. Ser. No. 14/691,335, filed Apr. 20, 2015 and U.S. Provisional Application Ser. No. 62/060,999, filed Oct. 7, 2014, entitled "SYSTEMS AND METHODS TO MANAGE FILE ACCESS," by Stefano Bargagni.

### BACKGROUND

Known tagged file systems are typically implemented by adding a tag-id directly in a document descriptor. Tagged file systems are generally represented graphically as a tree.

In a typical file system, a tree hierarchy of documents is typically implemented via folders (or directories), where a folder may contain documents or other folders. A parent folder may contain one or more child folders, but a child folder cannot be constructed to contain its parent. Although a cycle/loop may be introduced in the system via a special arrangement such as a symbolic link to a parent folder, the arrangement that utilizes special elements that are different from folders and documents in the system can be identified to remove the cycle/loop. Thus, such a file system essentially has a tree representation of hierarchy.

A system and a process for hierarchical tagging with permissions is known from the US Patent Publication No. 2012/304247 in the name of Badger et al.. Also known from US Patent Publication No. 2014/068074 in the name of Goyal et al. is a method for facilitating users/administrators to control access to a large number of electronic resources. Finally, The article to Bloehdorn and Voelkel entitled: "TagFS - Tag Semantics for Hierarchical File Systems" published on May 1, 2006 (XP055476726) describes a combination between strictly hierarchical and tagging-based systems.

### BRIEF DESCRIPTION OF THE DRAWINGS

The embodiments are illustrated by way of example and not limitation in the figures of the accompanying drawings in which like references indicate similar elements.
**Figure 1** shows a tag system according to one embodiment.
**Figure 2** shows a method to access files according to one embodiment.
**Figure 3** illustrates an example of a tag graph according to one embodiment.
**Figure 4** shows the sharing of tags according to one embodiment.
**Figure 5** shows a tag structure according to one embodiment.
**Figures 6 - 9** illustrate document sharing via a social network according to one embodiment.
**Figure 10** illustrates a data processing system according to one embodiment.

### DETAILED DESCRIPTION

The following description and drawings are illustrative and are not to be construed as limiting. Numerous specific details are described to provide a thorough understanding. However, in certain instances, well known or conventional details are not described in order to avoid obscuring the description. References to one or an embodiment in the present disclosure are not necessarily references to the same embodiment; and, such references mean at least one.

In one embodiment, a computer data storage system is configured to store a set of users. The system is configured to allow users to share information stored in the system.

For example, after a user is authenticated for access (e.g., via Social Network OAuth APIs), the user may upload a catalog of files. The user is allowed to modify the files with versioning of the files, and/or share the files other users. The user is allowed to organize the view of a sub-set of his or her catalog of files and let it be viewed by a list of users (or also by all the world) as a webpage or a video, or any other way to present it, accessible, for example, via http protocol (or any other communications protocol).

In one embodiment, the system is configured to allow a user to organize the files/documents by assigning one or more tags to the files/documents. A document can be tagged by multiple tags; and a tag itself can also be tagged by one or more other tags. The number of documents a tag can tag/contain is not limited in one embodiment. In other embodiments, a defined limit can be placed on this number.

In one embodiment, the tagging of files in the system is not limited to a tree topology. The user may construct tagged relations in a form of graph that contains one or more cycles or loops.

In one embodiment, the users in the system are connected via a social network or a personal account; and users are allowed to share documents and apply tags on shared documents. Tags can be applied to documents by both: (a) the users who are the owners of the respective documents; and (b) the users with whom the owners have shared the respective documents. Similarly, users are allowed to share tags and apply tags on shared tags. Tags can be applied to shared tags by both: (a) the users who are the owners of the respective shared tags; and (b) the users with whom the owners have shared the respective shared tags. In one embodiment, the graph of tags is visible to users who share that part of the graph.

In one embodiment, the tag arrangement described herein gives the tag graph a robust description power, which enriches the experience of users in terms of the power of the number of sharing times and subsets of a graph shared to other different users, as further discussed below.

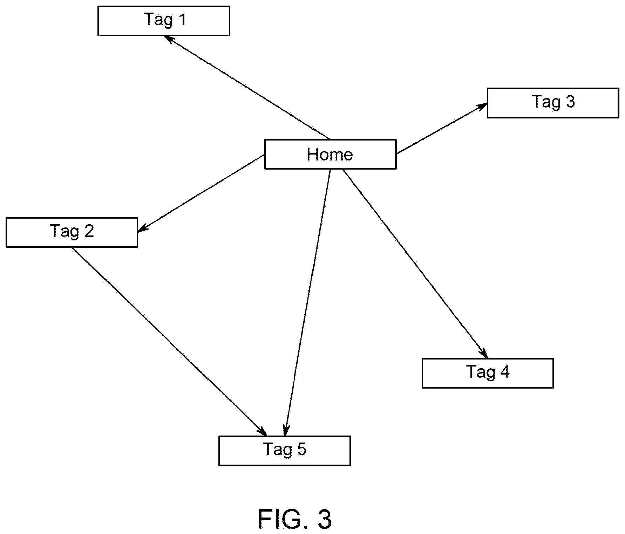

In one embodiment, the files in the system are tagged at least once. There is no limit to the number of tags a file can have. Further, a tag itself can be tagged by one or more other tags. This construction allows a file system that can be represented as a tag graph, as illustrated in **Figure 3****.**

In **Figure 3****,** a home tag of a user is applied to (e.g., tagged by) tag1, tag2, tag3, tag4, tag5 (as indicated by the arrows); and tag2 is applied to tag5.

In one embodiment, the tag graph is social based, in which a user can let any other user link (e.g., tag) his/her tags or, more generally, be a part of his/her tag graph (e.g., a tag sub-graph).

In one embodiment, a home tag is used to represent a user. It is a root of the tags owned by the user. Tags created by the user are descents of the home tag of the user.

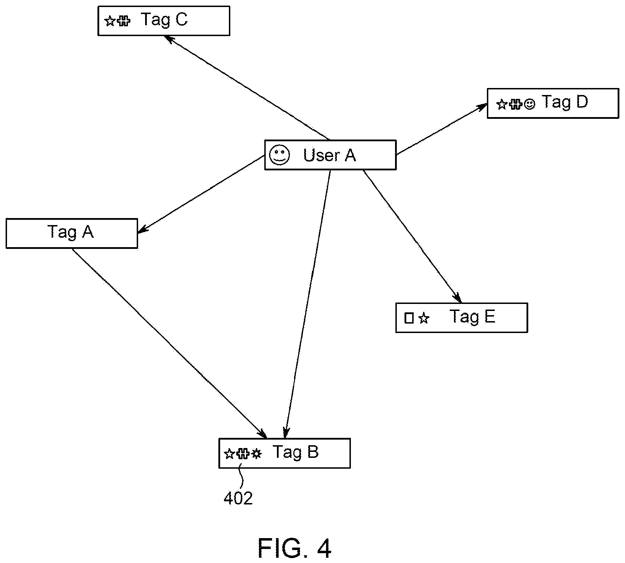

In **Figure 4****,** avatar pictures (illustrated as small images within a given tag) are shown in the representation of the tags (corresponding to tag1 to tag5 of **Figure 3****)** to indicate the identity of other users with whom the user has shared the tags. For example, Tag B has three avatar pictures 402 to indicate that Tag B is shared with the three users represented by the avatar pictures 402.

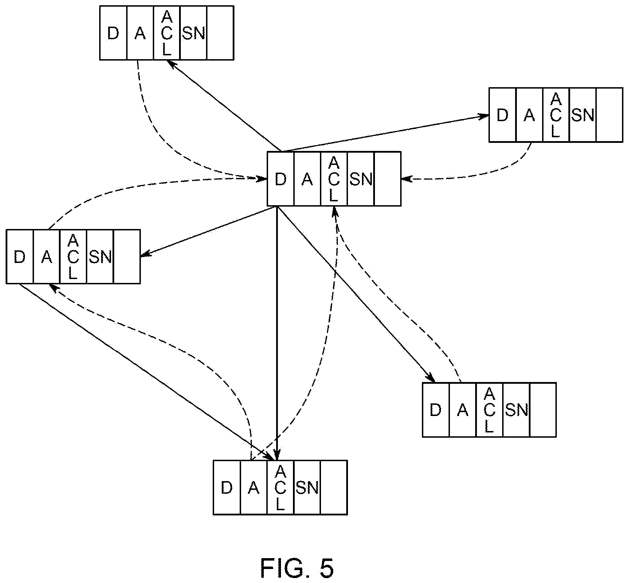

Tag graphs can be implemented using any graph-representing techniques known in the art. For example, information nodes containing pointers to descendants and pointers to ancestors may be used to implement the tag graph in a way as illustrated in **Figure 5****.**

In **Figure 5****,** the illustrated pointer structure corresponds to the tag graph illustrated in **Figure 3****.** In **Figure 5****,** data field (D) contains pointers to descendants, and data field (A) contains pointers to ancestors. Using this representation of a tag graph, each graph node can be reached by crawling the graph using various known algorithms (e.g., Dijkstra).

In one embodiment, each tag includes a field (ACL) for specifying access permission and a field (SN) for specifying information related to a social network (SN). By using the ACL and SN fields illustrated in **Figure 5****,** a tag can identify: the user who owns the tag; a set of users who are permitted to access the tag for reading; and a set of users who are permitted to access the tag for modifying (e.g., adding file and sharing it).

This approach for a file system allows users to interact with simple rules. As more users interact with the system, the tag graph grows and becomes more complicated. Information shared in such a way is improved and enriched.

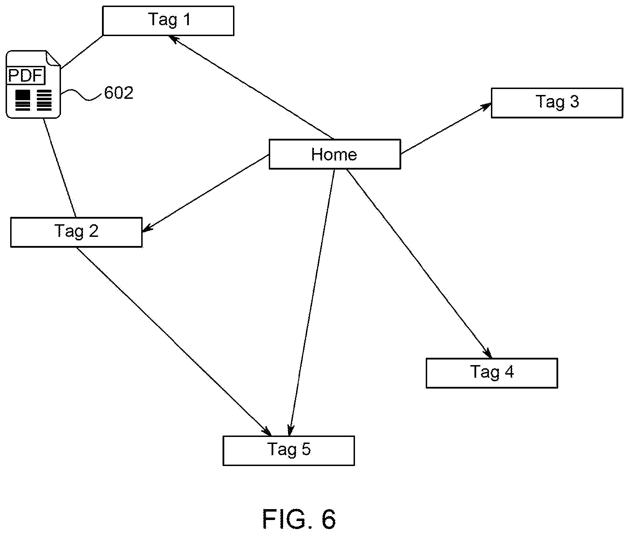

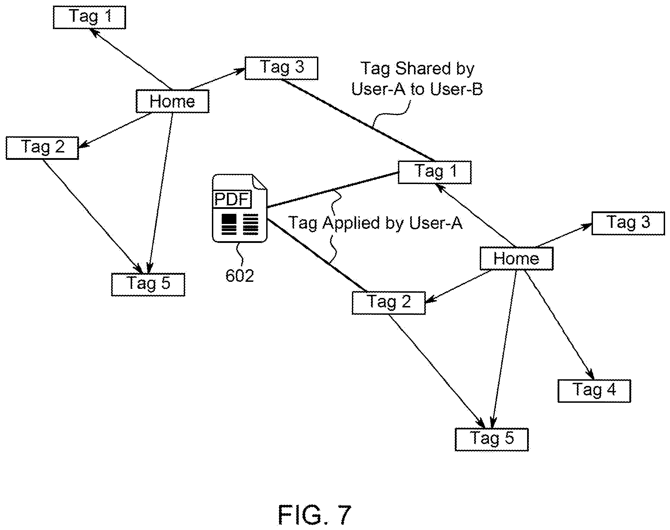

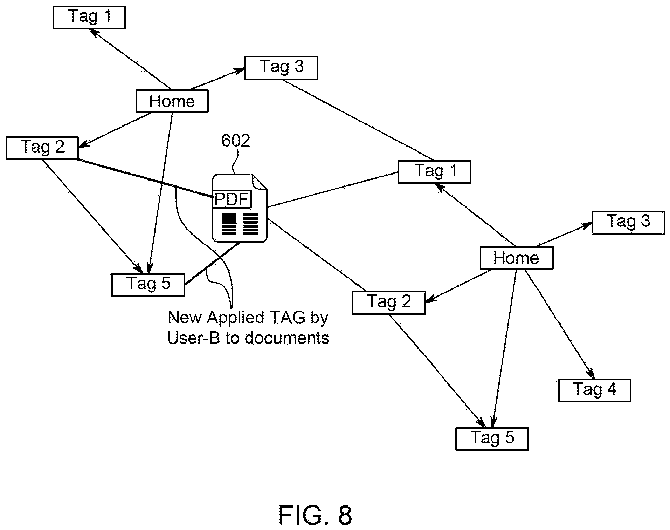

**Figures 6 - 9** illustrate document sharing via a social network according to one embodiment. For example, assume userA has applied TAG1 and TAG2 to a PDF document 602, as illustrated in **Figure 6****.** Then, userA shares TAG1 with a userB. This sharing allows userB to apply one of userB's tags to TAG1 of userA, as illustrated in **Figures 7** **and** **8****.**

Once a document, a tag, or a subset of tags of a user has been shared in the social network, it can be modified in content and tagged by other users (e.g., other users in the social network). For example, in **Figure 8****,** since userB is given access to the document, userB may apply some tags directly to the document or to any tag (e.g., a tag shared by userA).

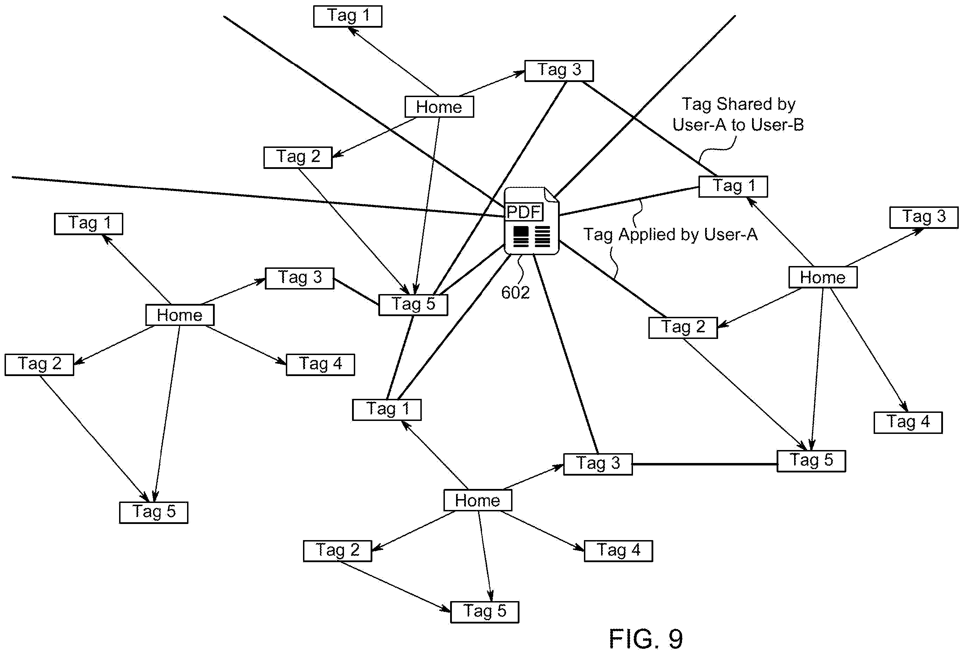

In one embodiment, there are no limits to the level of complexity that the tag graph can reach via user interactions, as illustrated in **Figure 9****.** For example, document 602 can be changed by a user, and the document can be tagged and shared again. By this process, a description of document 602 can be enriched by the application of an unlimited number of tags (e.g., the application of thousands or millions of tags).

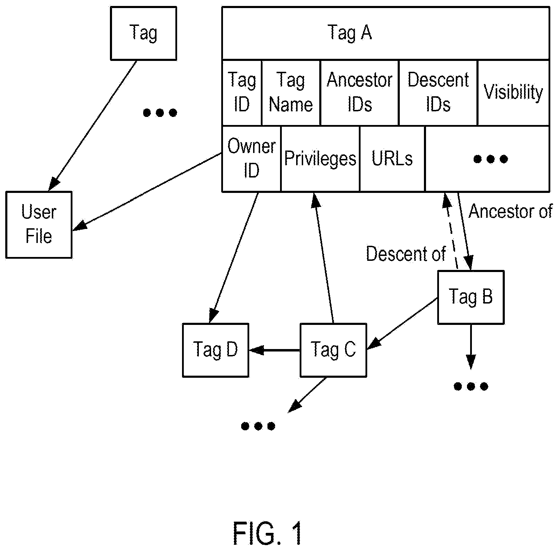

**Figure 1** shows a way to apply tags to a user file according to one embodiment. In **Figure 1****,** one or more tags, such as tag A, can be applied to a user file. Also, one or more tags can be applied to a tag, such as Tag A being applied to Tag B and Tag D, and Tag C being applied to Tag A and Tag D.

A typical tag, such as Tag A, may include a plurality of data fields, such as Tag ID, Tag Name, Ancestor IDs, Descent IDs, Owner ID, Privileges, URLs, Visibility, etc.

The Tag ID field uniquely identifies the tag among the tags created in the system. The Tag Name field is a text label used for presentation of the tag to a user.

The Ancestor IDs field includes the list of tag IDs of tags that have been applied to the tag. For example, in **Figure 1****,** Tag A is applied to Tag B; and thus Tag A is an ancestor of Tag B; the list of Ancestor IDs in Tag B includes the Tag ID of Tag A.

The Descent IDs field includes the list of tag IDs of tags to which the tag (e.g., Tag A) is applied. For example, in **Figure 1****,** Tag A is applied to Tag B; and thus Tag B is a descent of Tag A; the list of descent IDs in Tag A includes the Tag ID of Tag B. In some embodiments, the Descent IDs field of the tag may also include the IDs of the files to which the tag is applied.

The Owner ID field uniquely identifies a user that creates the tag.

The URLs field identifies one or more (e.g., up to 10) URL addresses that can be visited to view information (e.g., content or other data) related to the tag. Each of the URLs points to, for example, a web page that contains: documents (e.g., files to which the tag is applied), links (e.g., URL) to other pages (e.g., tags to which the tag is applied). In one embodiment, a link is included or presented in the page, if and only if a tag visibility (e.g., in the Visibility field) is set to PUBLIC.

The Visibility field indicates whether or not URLs are active. In one embodiment, the URLs are active only when the Visibility of the tag is set to PUBLIC.

The Privileges field identifies the set of rights provided by the owner of the tag to the users of the tag. Examples of privileges include read-only, read and write, delete, share read-only, share with modify, etc. For example, a "read-only" privilege specified in the tag indicates that a user of the tag may only view the tag and the objects (e.g., files or other tags) to which the tag is applied. However, the user is not allowed to share or modify the objects to which the tag is applied.

As another example, a "write" privilege specified in the tag indicates that a user of the tag may modify the tag and the objects (e.g., files or other tags) to which the tag is applied. The user is not allowed to share the tag and the objects with others to which the tag is applied. This power is given by a "share write" permission.

In another example, a public sharing level specified in the privilege may allow everyone on the network to access the tag via its public URL (or by any other method or protocol) in a read-only mode.

A user may create a tag A, apply the tag A to another tag D or to a document or user file, dis-apply the tag to an object, delete the tag, or share the tag (consequently a sub-graph of tags) with friends or other users to provide permissions/privileges specified in the tag, or change permissions/privileges given in the tag.

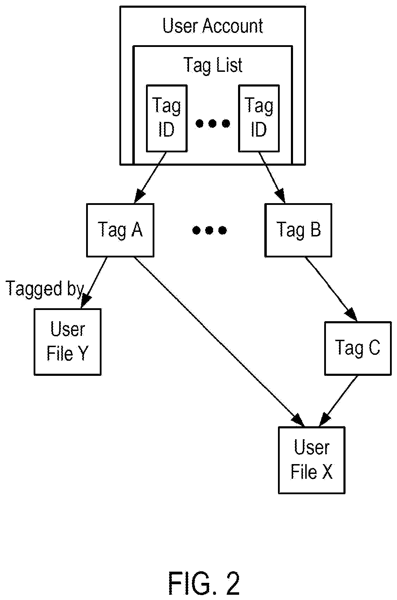

In **Figure 2****,** a user account includes a tag list that identifies the tags created by the user of the account, or shared by other users with the user of the account. The tag list includes tag IDs that uniquely identify the respective tags, such as Tag A ··· Tag B in **Figure 2****.**

In one embodiment, the user account in **Figure 2** is represented by a home tag (e.g., "HOME") as illustrated in **Figure 3****,** in which the home tag is created automatically for the user and applied to the tags created by the user. In one embodiment, the home tag of the user is the only "root" of the graph of tags of the user; and the user starts to navigate the graph from the root.

In one embodiment, the system is also configured to include a "super-root" that tags all users in the system, in which each user is presented by a home tag that tags the personal tags of the user.

Further, in one embodiment, the system may generate "meta-tags" that are (for instance) auto-generated "tags of tags", global or personal. For example, a meta-tag may be generated to represent all of the users in Florence; and another meta-tag can generated to represent the summer photos of the users (e.g., in the year 2014, 2015, etc.)

In one embodiment, the system is configured to index the tags and allow users to look up/search, starting from a root (e.g., the 'root' of the user base) and below. The system is also configured to provide a directory for the tags to let search engines (e.g., Google) index the tags and their documents. The control of this is given to the users by permissions on their respective tags.

In the example of **Figure 2****,** Tag A is applied to the User File Y and User File X; Tag C is applied to User File X; and Tag B is applied to Tag C. The user of the account may start to access the objects in the system from the tags identified in the tag list for the user account and follow the graph of tags to visit the ancestors of the tags (or start with the home tag of the user, as discussed above).

For example, the user of the account may select the tag B to access the tag C to which tag B is applied and then select user file X to which the tag C is applied in order to access user file X. When the user accesses the user file X via the tag B, the permissions/privileges of the user in accessing the user file X are determined by the privileges specified in tag B.

In the example of **Figure 2****,** the user can also access the same user file X via tag A, since the tag A is applied directly to the user file X in **Figure 2****.** When the user accesses the user file X by traversing the tag graph to reach the user file staring from tag A, the permissions/privileges of the user in accessing the user file X are determined by the privileges specified in tag A.

For example, the owner of the user file X may create tags A and C and apply them to user file X, where the tag A is also applied to user file Y. The owner of the user file X shares the tag A with the user of the user account, shares the tag C with a friend who in turn applies tag B to tag C and shares the tag B with the user of the user account illustrated in **Figure 2****.** Thus, the user of the user account illustrated in **Figure 2** has multiple ways to access the user file X, each of which ways may provide a different set of privileges with respect to the user file X.

For example, userA shares TAG-1 with userB in read-only mode. TAG-1 is applied to and thus contains file-x. UserA also shares TAG-2 with userB in write mode, wherein TAG-2 is also applied and thus contains file-x. UserB is allowed to modify file-x by reaching it via TAG-2, but not by reaching it via TAG-1.

In one embodiment, the visibility of a tag can be set to public (live tag) or private ("no expose" to WWW, or other applications/protocols). When the tag is public, it is shared with any user who can access the tag via the URLs of the tag.

In one embodiment, a tag can be set as public with an expiration date and time, after which the tag becomes private. It could also become private after a defined number of N views, or by other criteria. In one embodiment, a user may specify an expiration criterion (example given time and/or date); and the system is configured to put the tag in a private mode when the expiration criterion is satisfied.

In one embodiment, when a tag is private, it can be accessed only by users to whom the tag is explicitly shared by other users that have the privilege to share the tag.

In one embodiment, the system is configured to read a tag graph by level. When a tag is selected, the system reads and presents the tags and documents to which the selected tag is applied directly.

In one embodiment, the system allows the user to select multiple tags and apply the selected tags to a document, such as a document to be uploaded, or a document that has already been uploaded to the system.

In one embodiment, a web interface and/or a mobile application interface is provided to present the graph of tags accessible to the user, starting from the home tag of the user. The interface allows the user to navigate the graph of tags accessible to the user to visit tags and/or documents to which the tags are applied.

In one embodiment, the system is configured to periodically check the graph for consistency of links among the tags. When the system detects file system inconsistencies, they are solved at the file-system level, such as by checking object status when it is requested or by a sample-based background check.

### DATA PROCESSING IMPLEMENTATION

The systems and methods disclosed above are implemented in a computer apparatus in the form of a data processing system.

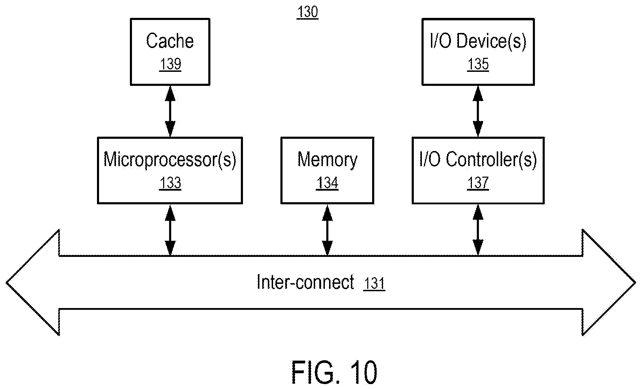

**Figure 10** illustrates a data processing system according to one embodiment. While **Figure 10** illustrates various components of a computer system, it is not intended to represent any particular architecture or manner of interconnecting the components. One embodiment may use other systems that have fewer or more components than those shown in **Figure 10****.**

In **Figure 10****,** the data processing system (130) includes an inter-connect (131) (e.g., bus and system core logic), which interconnects one or more microprocessors (133) and memory (134). The microprocessor (133) is coupled to cache memory (139) in the example of **Figure 10****.**

In one embodiment, the inter-connect (131) interconnects the microprocessor(s) (133) and the memory (134) together and also interconnects them to input/output (I/O) device(s) (135) via I/O controller(s) (137). I/O devices (135) may include a display device and/or peripheral devices, such as mice, keyboards, modems, network interfaces, printers, scanners, video cameras and other devices known in the art. In one embodiment, when the data processing system is a server system, some of the I/O devices (135), such as touch screens, printers, scanners, mice, and/or keyboards, are optional.

In one embodiment, the inter-connect (131) includes one or more buses connected to one another through various bridges, controllers and/or adapters. In one embodiment the I/O controllers (137) include a USB (Universal Serial Bus) adapter for controlling USB peripherals, and/or an IEEE-1394 bus adapter for controlling IEEE-1394 peripherals.

In one embodiment, the memory (134) includes one or more of: ROM (Read Only Memory), volatile RAM (Random Access Memory), and non-volatile memory, such as hard drive, flash memory, etc.

Volatile RAM is typically implemented as dynamic RAM (DRAM) which requires power continually in order to refresh or maintain the data in the memory. Non-volatile memory is typically a magnetic hard drive, a magnetic optical drive, an optical drive (e.g., a DVD RAM), or other type of memory system which maintains data even after power is removed from the system. The non-volatile memory may also be a random access memory.

The non-volatile memory can be a local device coupled directly to the rest of the components in the data processing system. A non-volatile memory that is remote from the system, such as a network storage device coupled to the data processing system through a network interface such as a modem or Ethernet interface, can also be used.

In this description, some functions and operations are described as being performed by or caused by software code to simplify description. However, such expressions are also used to specify that the functions result from execution of the code/instructions by a processor, such as a microprocessor.

Alternatively, or in combination, the functions and operations as described here can be implemented using special purpose circuitry, with or without software instructions, such as using Application-Specific Integrated Circuit (ASIC) or Field-Programmable Gate Array (FPGA). Embodiments can be implemented using hardwired circuitry without software instructions, or in combination with software instructions. Thus, the techniques are limited neither to any specific combination of hardware circuitry and software, nor to any particular source for the instructions executed by the data processing system.

While one embodiment can be implemented in fully functioning computers and computer systems, various embodiments are capable of being distributed as a computing product in a variety of forms and are capable of being applied regardless of the particular type of machine or computer-readable media used to actually effect the distribution.

At least some aspects disclosed can be embodied, at least in part, in software. That is, the techniques may be carried out in a computer system or other data processing system in response to its processor, such as a microprocessor, executing sequences of instructions contained in a memory, such as ROM, volatile RAM, non-volatile memory, cache or a remote storage device.

Routines executed to implement the embodiments may be implemented as part of an operating system or a specific application, component, program, object, module or sequence of instructions referred to as "computer programs." The computer programs typically include one or more instructions set at various times in various memory and storage devices in a computer, and that, when read and executed by one or more processors in a computer, cause the computer to perform operations necessary to execute elements involving the various aspects.

A machine readable medium can be used to store software and data which when executed by a data processing system causes the system to perform various methods. The executable software and data may be stored in various places including for example ROM, volatile RAM, non-volatile memory and/or cache. Portions of this software and/or data may be stored in any one of these storage devices. Further, the data and instructions can be obtained from centralized servers or peer to peer networks. Different portions of the data and instructions can be obtained from different centralized servers and/or peer to peer networks at different times and in different communication sessions or in a same communication session. The data and instructions can be obtained in entirety prior to the execution of the applications. Alternatively, portions of the data and instructions can be obtained dynamically, just in time, when needed for execution. Thus, it is not required that the data and instructions be on a machine readable medium in entirety at a particular instance of time.

Examples of computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., Compact Disk Read-Only Memory (CD ROMS), Digital Versatile Disks (DVDs), etc.), among others. The computer-readable media may store the instructions.

The instructions may also be embodied in digital and analog communication links for electrical, optical, acoustical or other forms of propagated signals, such as carrier waves, infrared signals, digital signals, etc. However, propagated signals, such as carrier waves, infrared signals, digital signals, etc. are not tangible machine readable medium and are not configured to store instructions.

In general, a machine readable medium includes any mechanism that provides (i.e., stores and/or transmits) information in a form accessible by a machine (e.g., a computer, network device, personal digital assistant, manufacturing tool, any device with a set of one or more processors, etc.).

In various embodiments, hardwired circuitry may be used in combination with software instructions to implement the techniques. Thus, the techniques are neither limited to any specific combination of hardware circuitry and software nor to any particular source for the instructions executed by the data processing system.

The description and drawings are illustrative and are not to be construed as limiting. Numerous specific details are described to provide a thorough understanding. However, in certain instances, well known or conventional details are not described in order to avoid obscuring the description. References to one or an embodiment in the present disclosure are not necessarily references to the same embodiment; and, such references mean at least one.

The use of headings herein is merely provided for ease of reference, and shall not be interpreted in any way to limit this disclosure or the following claims.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, and are not necessarily all referring to separate or alternative embodiments mutually exclusive of other embodiments. Moreover, various features are described which may be exhibited by one embodiment and not by others. Similarly, various requirements are described which may be requirements for one embodiment but not other embodiments. Unless excluded by explicit description and/or apparent incompatibility, any combination of various features described in this description is also included here. For example, the features described above in connection with "in one embodiment" or "in some embodiments" can be all optionally included in one implementation, except where the dependency of certain features on other features, as apparent from the description, may limit the options of excluding selected features from the implementation, and incompatibility of certain features with other features, as apparent from the description, may limit the options of including selected features together in the implementation.

In the foregoing specification, the disclosure has been described with reference to specific exemplary embodiments thereof. It will be evident that various modifications may be made thereto without departing from the scope as set forth in the following claims. The specification and drawings are, accordingly, to be regarded in an illustrative sense rather than a restrictive sense.

## Claims

1. A non-transitory computer storage medium (134) storing computer-readable instructions, which when executed, cause a data processing system (130) to:
store, by the system (130), a set of files (602) and a plurality of tags (402), the tags including a first tag (402), a second tag (402), a third tag (402);
the plurality of tags (402) being stored in a tag graph comprising a plurality of information nodes containing pointers to descendants, pointers to ancestors, and privileges fields identifying sets of rights provided by owners of the tags to users of the tags;
apply the first tag (402) to a first file (602) of the set of files (602), an information node corresponding to the first tag having a pointer to the first file;
provide first user access to the first file (602) to a user via the first tag when the first tag (402) has a first privileges field specifying access to the first file (602) according to a first privilege;
apply the second tag (402) to the third tag (402), an information node corresponding to the third tag having a pointer to an ancestor identifying the second tag and an information node corresponding to the second tag having a pointer to a descendant identifying the third tag;
apply the third tag (402) to the first file (602) an information node corresponding to the third tag having a pointer to the first file; and
provide second user access to the first file (602) to the user via the second tag when the second tag (402) has a second privileges field specifying access to the first file (602) according to a second privilege, wherein the first user access is different than the second user access and the first privilege and second privilege are different.

2. The non-transitory computer storage medium (134) of claim 1, wherein the first privilege is a read-only privilege, and the second privilege is a write privilege.

3. The non-transitory computer storage medium (134) of claim 1, wherein the second tag (402) can be accessed only by users to whom the second tag (402) is shared.

4. The non-transitory computer storage medium (134) of claim 1, wherein the instructions further cause the data processing system (130) to present a graph of tags (402) to a first user on a user interface, the user interface allowing the first user to navigate the graph of tags to access documents (602) to which tags (402) in the graph are applied.

5. The non-transitory computer storage medium (134) of claim 1, wherein the instructions further cause the data processing system (130) to store a tag list for a first user, the tag list comprising a unique tag identifier for each of the first (402) and second tags (402).

6. The non-transitory computer storage medium (134) of claim 5, wherein the pointers to descendants comprise a list of tag identifiers to which the tag (402) is applied.

7. The non-transitory computer storage medium (134) of claim 1, wherein each of the plurality of tags (402) comprises a field that identifies at least one URL address that can be visited by a user to view information related to the tag (402).

8. A system, comprising:
at least one processor (133); and
memory (134) storing instructions configured to instruct the at least one processor to cause performance of the non-transitory computer storage medium (134) storing computer-readable instructions recited in any one of claims 1 - 7.

9. A computer-implemented method comprising:
storing, by a data processing system (130), a set of files (602) and a plurality of tags (402), the tags including a first tag (402), a second tag (402), a third tag (402);
the plurality of tags (402) being stored in a tag graph comprising a plurality of information nodes containing pointers to descendants, pointers to ancestors, and privileges fields identifying sets of rights provided by owners of the tags to users of the tags;
applying the first tag (402) to a first file (602) of the set of files (602), an information node corresponding to the first tag having a pointer to the first file;
providing first user access to the first file (602) to a user via the first tag when the first tag (402) has a first privileges field specifying access to the first file (602) according to a first right;
applying the second tag (402) to the third tag (402), an information node corresponding to the third tag having a pointer to an ancestor identifying the second tag and an information node corresponding to the second tag having a pointer to a descendant identifying the third tag;
applying the third tag (402) to the first file (602) an information node corresponding to the third tag having a pointer to the first file; and
providing second user access to the first file (602) to the user via the second tag when the second tag (402) has a second privileges field specifying access to the first file (602) according to a second privilege, wherein the first user access is different than the second user access and the first privilege and second privilege are different.

10. The method of claim 9, wherein the first privilege is a read-only privilege, and the second privilege is a write privilege.

11. The method of claim 9, wherein the second tag (402) can be accessed only by users to whom the second tag (402) is shared.

12. The method of claim 9, further comprising presenting a graph of tags (402) to a first user on a user interface, the user interface allowing the first user to navigate the graph of tags to access documents (602) to which tags (402) in the graph are applied.

13. The method of claim 9, further comprising storing a tag list for a first user, the tag list comprising a unique tag identifier for each of the first (402) and second tags (402).

14. The method of claim 13, wherein the pointers to descendants comprise a list of tag identifiers to which the tag (402) is applied.

15. The method of claim 9, wherein each of the plurality of tags (402) comprises a field that identifies at least one URL address that can be visited by a user to view information related to the tag (402).

## Patentansprüche

1. Nichttransitorisches Computerspeichermedium (134), das computerlesbare Anweisungen speichert, die bei Ausführung ein Datenverarbeitungssystem (130) veranlassen:
durch das System (130) einen Dateiensatz (602) und mehrere Tags (402) zu speichern, die Tags umfassend einen ersten Tag (402), einen zweiten Tag (402), einen dritten Tag (402);
wobei die mehreren Tags (402) in einem Taggrafen gespeichert sind, der mehrere Informationsknoten umfasst, die Zeiger auf Nachfahren, Zeiger auf Vorfahren und Privilegienfelder umfassen, die Rechtesätze identifizieren, die durch Eigentümer der Tags an Benutzer der Tags bereitgestellt sind;
den ersten Tag (402) auf eine erste Datei (602) des ersten Dateiensatzes (602) anzuwenden, wobei ein Informationsknoten, der dem ersten Tag entspricht, einen Zeiger auf die erste Datei aufweist;
ersten Benutzerzugriff auf die erste Datei (602) für einen Benutzer über den ersten Tag bereitzustellen, wenn der erste Tag (402) ein erstes Privilegienfeld aufweist, das Zugriff einem ersten Privileg entsprechend auf die erste Datei (602) spezifiziert;
den zweiten Tag (402) auf den dritten Tag (402) anzuwenden, wobei ein Informationsknoten, der dem dritten Tag entspricht, einen Zeiger auf einen Vorfahren aufweist, der den zweiten Tag identifiziert, und ein Informationsknoten, der dem zweiten Tag entspricht, einen Zeiger auf einen Nachfahren aufweist, der den dritten Tag identifiziert;
den dritten Tag (402) auf die erste Datei (602) anzuwenden, wobei ein Informationsknoten, der dem dritten Tag entspricht, einen Zeiger auf die erste Datei aufweist; und
zweiten Benutzerzugriff auf die erste Datei (602) für den Benutzer über den zweiten Tag bereitzustellen, wenn der zweite Tag (402) ein zweites Privilegienfeld aufweist, das Zugriff einem zweiten Privileg entsprechend auf die erste Datei (602) spezifiziert, wobei sich der erste Benutzerzugriff von dem zweiten Benutzerzugriff unterscheidet und das erste Privileg und das zweite Privileg sich voneinander unterscheiden.

2. Nichttransitorisches Computerspeichermedium (134) nach Anspruch 1, wobei das erste Privileg ein reines Leseprivileg ist und das zweite Privileg ein Schreibprivileg ist.

3. Nichttransitorisches Computerspeichermedium (134) nach Anspruch 1, wobei auf den zweiten Tag (402) nur Benutzer zugreifen können, mit denen der zweite Tag (402) geteilt ist.

4. Nichttransitorisches Computerspeichermedium (134) nach Anspruch 1, wobei die Anweisungen ferner das Datenverarbeitungssystem (130) veranlassen, einen Taggrafen (402) für eine erste Benutzergruppe auf einer Benutzeroberfläche darzustellen, wobei die Benutzeroberfläche dem ersten Benutzer erlaubt, in dem Taggrafen zu navigieren, um auf Dokumente (602) zuzugreifen, auf die Tags (402) in dem Grafen angewendet sind.

5. Nichttransitorisches Computerspeichermedium (134) nach Anspruch 1, wobei die Anweisungen ferner das Datenverarbeitungssystem (130) veranlassen, eine Tagliste für einen ersten Benutzer zu speichern, die Tagliste umfassend eine eindeutige Tagkennung für jeweils den ersten (402) und den zweiten Tag (402).

6. Nichttransitorisches Computerspeichermedium (134) nach Anspruch 5, wobei die Zeiger auf Nachfahren eine Liste von Tagkennungen umfassen, auf die der Tag (402) angewendet wird.

7. Nichttransitorisches Computerspeichermedium (134) nach Anspruch 1, wobei jeder der mehreren Tags (402) ein Feld umfasst, das mindestens eine URL-Adresse identifiziert, die durch einen Benutzer besucht werden kann, um Informationen den Tag (402) betreffend zu betrachten.

8. System, umfassend:
mindestens einen Prozessor (133); und
Speicher (134), der Anweisungen speichert, die konfiguriert sind, den mindestens einen Prozessor anzuweisen, eine Ausführung des nichttransitorischen Computerspeichermediums (134) zu veranlassen, das computerlesbare Anweisungen speichert, wie in einem der Ansprüche 1 bis 7 dargelegt.

9. Computerumgesetztes Verfahren, umfassend:
Speichern eines Dateiensatzes (602) und mehrerer Tags (402) durch ein Datenverarbeitungssystem (130), die Tags umfassend einen ersten Tag (402), einen zweiten Tag (402), einen dritten Tag (402);
wobei die mehreren Tags (402) in einem Taggrafen gespeichert sind, der mehrere Informationsknoten umfasst, die Zeiger auf Nachfahren, Zeiger auf Vorfahren und Privilegienfelder umfassen, die Rechtesätze identifizieren, die durch Eigentümer der Tags an Benutzer der Tags bereitgestellt sind;
Anwenden des ersten Tags (402) auf eine erste Datei (602) des ersten Dateiensatzes (602), wobei ein Informationsknoten, der dem ersten Tag entspricht, einen Zeiger auf die erste Datei aufweist;
Bereitstellen eines ersten Benutzerzugriffs auf die erste Datei (602) für einen Benutzer über den ersten Tag, wenn der erste Tag (402) ein erstes Privilegienfeld aufweist, das Zugriff einem ersten Recht entsprechend auf die erste Datei (602) spezifiziert;
Anwenden des zweiten Tags (402) auf den dritten Tag (402), wobei ein Informationsknoten, der dem dritten Tag entspricht, einen Zeiger auf einen Vorfahren aufweist, der den zweiten Tag identifiziert, und ein Informationsknoten, der dem zweiten Tag entspricht, einen Zeiger auf einen Nachfahren aufweist, der den dritten Tag identifiziert;
Anwenden des dritten Tags (402) auf die erste Datei (602), wobei ein Informationsknoten, der dem dritten Tag entspricht, einen Zeiger auf die erste Datei aufweist; und
Bereitstellen eines zweiten Benutzerzugriffs auf die erste Datei (602) für den Benutzer über den zweiten Tag, wenn der zweite Tag (402) ein zweites Privilegienfeld aufweist, das Zugriff einem zweiten Privileg entsprechend auf die erste Datei (602) spezifiziert, wobei sich der erste Benutzerzugriff von dem zweiten Benutzerzugriff unterscheidet und das erste Privileg und das zweite Privileg sich voneinander unterscheiden.

10. Verfahren nach Anspruch 9, wobei das erste Privileg ein reines Leseprivileg ist und das zweite Privileg ein Schreibprivileg ist.

11. Verfahren nach Anspruch 9, wobei auf den zweiten Tag (402) nur Benutzer zugreifen können, mit denen der zweite Tag (402) geteilt ist.

12. Verfahren nach Anspruch 9, ferner umfassend das Darstellen eines Taggrafen (402) für eine erste Benutzergruppe auf einer Benutzeroberfläche, wobei die Benutzeroberfläche dem ersten Benutzer erlaubt, in dem Taggrafen zu navigieren, um auf Dokumente (602) zuzugreifen, auf die Tags (402) in dem Grafen angewendet sind.

13. Verfahren nach Anspruch 9, ferner umfassend das Speichern einer Tagliste für einen ersten Benutzer, die Tagliste umfassend eine eindeutige Tagkennung für jeweils den ersten (402) und den zweiten Tag (402).

14. Verfahren nach Anspruch 13, wobei die Zeiger auf Nachfahren eine Liste von Tagkennungen umfassen, auf die der Tag (402) angewendet wird.

15. Verfahren nach Anspruch 9, wobei jeder der mehreren Tags (402) ein Feld umfasst, das mindestens eine URL-Adresse identifiziert, die durch einen Benutzer besucht werden kann, um Informationen den Tag (402) betreffend zu betrachten.

## Revendications

1. Support de stockage informatique non transitoire (134) stockant des instructions lisibles par ordinateur qui, lorsqu'elles sont exécutées, amènent un système de traitement de données (130) à :
stocker, par le système (130), un ensemble de fichiers (602) et une pluralité d'étiquettes (402), les étiquettes incluant une première étiquette (402), une deuxième étiquette (402), une troisième étiquette (402) ;
la pluralité d'étiquettes (402) étant stockée dans un graphe d'étiquettes comprenant une pluralité de noeuds d'information contenant des pointeurs vers des descendants, des pointeurs vers des ascendants, et des champs de privilèges identifiant des ensembles de droits fournis par les propriétaires des étiquettes aux utilisateurs des étiquettes ;
appliquer la première étiquette (402) à un premier fichier (602) de l'ensemble de fichiers (602), un noeud d'information correspondant à la première étiquette présentant un pointeur vers le premier fichier ;
fournir un premier accès utilisateur au premier fichier (602) à un utilisateur via la première étiquette lorsque la première étiquette (402) présente un premier champ de privilèges spécifiant l'accès au premier fichier (602) conformément à un premier privilège ;
appliquer la deuxième étiquette (402) à la troisième étiquette (402), un noeud d'information correspondant à la troisième étiquette présentant un pointeur vers un ascendant identifiant la deuxième étiquette et un noeud d'information correspondant à la deuxième étiquette présentant un pointeur vers un descendant identifiant la troisième étiquette ;
appliquer la troisième étiquette (402) au premier fichier (602), un noeud d'information correspondant à la troisième étiquette présentant un pointeur vers le premier fichier ; et
fournir un second accès utilisateur au premier fichier (602) à l'utilisateur via la deuxième étiquette lorsque la deuxième étiquette (402) présente un second champ de privilèges spécifiant l'accès au premier fichier (602) conformément à un second privilège, dans lequel le premier accès utilisateur est différent du second accès utilisateur et le premier privilège et le second privilège sont différents.

2. Support de stockage informatique non transitoire (134) selon la revendication 1, dans lequel le premier privilège est un privilège de lecture seule, et le second privilège est privilège d'écriture.

3. Support de stockage informatique non transitoire (134) selon la revendication 1, dans lequel la deuxième étiquette (402) est accessible uniquement par les utilisateurs avec lesquels la deuxième étiquette (402) est partagée.

4. Support de stockage informatique non transitoire (134) selon la revendication 1, dans lequel les instructions amènent en outre le système de traitement de données (130) à présenter un graphe d'étiquettes (402) à un premier utilisateur sur une interface utilisateur, l'interface utilisateur permettant au premier utilisateur de naviguer à travers le graphe d'étiquettes afin d'accéder à des documents (602) auxquels sont appliquées les étiquettes (402) dans le graphe.

5. Support de stockage informatique non transitoire (134) selon la revendication 1, dans lequel les instructions amènent en outre le système de traitement de données (130) à stocker une liste d'étiquettes pour un premier utilisateur, la liste d'étiquettes comprenant un identifiant d'étiquette unique pour chacune des première (402) et deuxième étiquettes (402).

6. Support de stockage informatique non transitoire (134) selon la revendication 5, dans lequel les pointeurs vers des descendants comprennent une liste d'identifiants d'étiquette auxquels l'étiquette (402) est appliquée.

7. Support de stockage informatique non transitoire (134) selon la revendication 1, dans lequel chacune de la pluralité d'étiquettes (402) comprend un champ qui identifie au moins une adresse URL qui peut être visitée par un utilisateur afin de voir des informations relatives à l'étiquette (402).

8. Système, comprenant :
au moins un processeur (133) ; et
une mémoire (134) stockant des instructions configurées pour ordonner à l'au moins un processeur de provoquer le fonctionnement du support de stockage informatique non transitoire (134) stockant des instructions lisibles par ordinateur selon l'une quelconque des revendications 1 à 7.

9. Procédé mis en oeuvre par ordinateur comprenant :
stocker, par un système de traitement de données (130), un ensemble de fichiers (602) et une pluralité d'étiquettes (402), les étiquettes incluant une première étiquette (402), une deuxième étiquette (402), une troisième étiquette (402) ;
la pluralité d'étiquettes (402) étant stockée dans un graphe d'étiquettes comprenant une pluralité de noeuds d'information contenant des pointeurs vers des descendants, des pointeurs vers des ascendants, et des champs de privilèges identifiant des ensembles de droits fournis par les propriétaires des étiquettes aux utilisateurs des étiquettes ;
appliquer la première étiquette (402) à un premier fichier (602) de l'ensemble de fichiers (602), un noeud d'information correspondant à la première étiquette présentant un pointeur vers le premier fichier ;
fournir un premier accès utilisateur au premier fichier (602) à un utilisateur via la première étiquette lorsque la première étiquette (402) présente un premier champ de privilèges spécifiant l'accès au premier fichier (602) conformément à un premier droit ;
appliquer la deuxième étiquette (402) à la troisième étiquette (402), un noeud d'information correspondant à la troisième étiquette présentant un pointeur vers un ascendant identifiant la deuxième étiquette et un noeud d'information correspondant à la deuxième étiquette présentant un pointeur vers un descendant identifiant la troisième étiquette ;
appliquer la troisième étiquette (402) au premier fichier (602), un noeud d'information correspondant à la troisième étiquette présentant un pointeur vers le premier fichier ; et
fournir un second accès utilisateur au premier fichier (602) à l'utilisateur via la deuxième étiquette lorsque la deuxième étiquette (402) présente un second champ de privilèges spécifiant l'accès au premier fichier (602) conformément à un second privilège, dans lequel le premier accès utilisateur est différent du second accès utilisateur et le premier privilège et le second privilège sont différents.

10. Procédé selon la revendication 9, dans lequel le premier privilège est un privilège de lecture seule, et le second privilège est privilège d'écriture.

11. Procédé selon la revendication 9, dans lequel la deuxième étiquette (402) est accessible uniquement par les utilisateurs avec lesquels la deuxième étiquette (402) est partagée.

12. Procédé selon la revendication 9, comprenant en outre présenter un graphe d'étiquettes (402) à un premier utilisateur sur une interface utilisateur, l'interface utilisateur permettant au premier utilisateur de naviguer à travers le graphe d'étiquettes afin d'accéder à des documents (602) auxquels sont appliquées les étiquettes (402) dans le graphe.

13. Procédé selon la revendication 9, comprenant en outre stocker une liste d'étiquettes pour un premier utilisateur, la liste d'étiquettes comprenant un identifiant d'étiquette unique pour chacune des première (402) et deuxième étiquettes (402).

14. Procédé selon la revendication 13, dans lequel les pointeurs vers des descendants comprennent une liste d'identifiants d'étiquette auxquels l'étiquette (402) est appliquée.

15. Procédé selon la revendication 9, dans lequel chacune de la pluralité d'étiquettes (402) comprend un champ qui identifie au moins une adresse URL qui peut être visitée par un utilisateur afin de voir des informations relatives à l'étiquette (402).
